# EUROPÄISCHE PATENTSCHRIFT

(11) **EP 2 359 579 B1**
(45) Veröffentlichungstag und Bekanntmachung des Hinweises auf die Patenterteilung: **12.02.2014**
(21) Anmeldenummer: 09774809.9
(22) Anmeldetag: 19.11.2009
(51) Int. Cl.: H04L 29/12, H05B 33/08, H05B 37/02, H04L 12/403

(54) **ADRESSIERUNGSVERFAHREN FÜR EIN LEUCHTMITTEL, INSBESONDERE LEUCHTDIODEN**
ADDRESSING METHOD FOR A LAMP, PARTICULARLY LIGHT-EMITTING DIODES
PROCÉDÉ D'ADRESSAGE POUR UN MOYEN D'ÉCLAIRAGE, EN PARTICULIER DES DIODES ÉLECTROLUMINESCENTES

(30) Priorität: 21.11.2008 AT 66708 U
(43) Veröffentlichungstag der Anmeldung: 24.08.2011
(73) Patentinhaber: Tridonic GmbH & Co KG, 6851 Dornbirn (AT)
(72) Erfinder: JUEN, Reinhold, A-6850 Dornbirn (AT)
(74) Vertreter: Barth, Alexander
(86) Internationale Anmeldenummer: PCT/AT2009/000451
(87) Internationale Veröffentlichungsnummer: WO 2010/057241

(56) Entgegenhaltungen:
- US-A- 5 530 896
- US-A1- 2004 217 718
- US-A1- 2004 240 395

## Beschreibung

Die Erfindung betrifft Adressierungsverfahren für ein Leuchtmittel gemäß dem Oberbegriff des Patentanspruchs 1 und ein Beleuchtungsanlage mit mindestens einem Leuchtmittel gemäß dem Oberbegriff des Patentanspruchs 7.

### Technisches Gebiet

Derartige Verfahren werden zur Ansteuerung von Betriebsgeräten für Leuchtmittel genutzt und werden in Beleuchtungssystemen verwendet, um Leuchtmittel mit Hilfe einer zentralen Steuereinheit ein- und auszuschalten und in der Helligkeit einzustellen. Üblicherweise werden dabei die Leuchtmittel von Betriebsgeräten angesteuert. Die Betriebsgeräte werden in Gruppen zusammengefasst und können von einer oder auch mehreren zentralen Steuereinheiten gesteuert werden. Mit dem Begriff Leuchtmittel werden sowohl Gasentladungslampen als auch Halogenlampen oder Leuchtdioden (LED, organische oder anroganische) bezeichnet. Ein derartiges Leuchtmittel kann einzeln oder gemeinsam mit weiteren Leuchtmitteln in einer Leuchte angeordnet sein, die auch das Betriebsgerät enthalten kann. Eine besondere Form der Leuchte sind die sogenannten Energiesparlampen, die unter anderem ein Lichtmittel (beispielsweise Leuchtdioden oder Gasentladungslampen), eine Ansteuerelektronik und einen Sockel aufweisen.

### Stand der Technik

Gemäß dem Stand der Technik werden Betriebsgeräte dadurch adressiert, dass die Verbindung zwischen Leuchtmittel und Betriebsgerät unterbrochen wird. Diese Unterbrechung wird vom den Betriebsgerät erkannt und dieses Betriebsgerät übernimmt die aktuell von der zentralen Steuereinheit zu vergebende Adresse. Diese Art der Adressierung erfordert einen hohen Zeit- und Arbeitsaufwand, da während der Installation bei der gesamten Beleuchtungsanlage jedes einzelne Leuchtmittel getrennt werden muß.

Es existieren zwar bereits Methoden zur automatischen Adressevergabe, beispielsweise per Zufallszahl, aber bei großen Beleuchtungsanlagen erfordern diese einen hohen Zeitaufwand und es kann zu vielen Doppeladressierungen kommen. Die Vermeidung dieser Doppeladressierungen erfordert nach dem bekannten Stand der Technik einen hohen Zeit- und Rechenaufwand.

Die Dokumente US 5,530,896 und US2004/0240395 behandeln beide das Thema der automatischen und erleichterten Adressierung von funktionalen Einheiten innerhalb eines größeres Systems. Insbesondere offenbart das Dokument US 5,530,896 die Erzeugung von Adressen basierend auf einer Operation und einer vorgegebenen Operand. Das Dokument US2004/0240395 schlägt die Verwendung eines Rankes als Adresse vor, wobei ein Rank durch eine modulo-Operation berechnet werden kann. US2004/0240395 offenbart zusätzlich die Wiederholung des Adressenvergabenprozesses im Fall von Doppeladressierung.

### Darstellung der Erfindung

Es ist die Aufgabe der Erfindung, ein Adressierungsverfahren für ein Leuchtmittel, insbesondere Leuchtdioden, bereitzustellen, wobei die Leuchtmittel durch zumindest ein Betriebsgerät abhängig von Befehlen einer zentralen Steuereinheit angesteuert werden, gekennzeichnet durch die folgenden Schritte: Versetzen der Betriebsgeräte in einen Adressierungsmodus, Auslesen der jeweils in dem Betriebsgerät abgelegten voreingestellten Adresse durch das Betriebsgerät, Veranlassen einer Modulo-Operation durch die zentrale Steuereinheit, wobei ein Operand für die Modulo-Operation vorgegeben wird, Durchführen der Modulo-Operation mit der voreingestellten Adresse und dem vorgegebenen Operand und Ablegen des Ergebnisses als neu vergebene Adresse des Betriebsgerätes.

Diese Aufgabe wird für ein Verfahren erfindungsgemäß durch die kennzeichnenden Merkmale der Patentansprüche 1 und für eine gattungsgemäße Vorrichtung erfindungsgemäß durch die kennzeichnenden Merkmale des Patentanspruchs 10 gelöst. Besonders vorteilhafte Ausführungen der Erfindung sind in den Unteransprüchen beschrieben.

Die Erfindung bezieht sich auch auf eine Beleuchtungsanlage mit mindestens einem Leuchtmittel, wobei die Leuchtmittel durch zumindest ein Betriebsgerät abhängig von Befehlen einer zentralen Steuereinheit angesteuert werden, und die Betriebsgeräte eine Adresse aufweisen, wobei die Berechnung der dem Betriebsgerät zu vergebenden Adresse aufgrund einer Modulo-Operation erfolgt.

Die Erfindung bezieht sich auch auf ein Betriebsgerät für Leuchtmittel zur Durchführung des erfindungsgemäßen Adressierungsverfahrens.

Auf diese Weise ist es möglich, ein Adressierungsverfahren für ein Leuchtmittel bereitzustellen, das auf einfache und schnelle Weise durchgeführt werden kann.

Beschreibung der bevorzugten Ausführungsbeispiele Nachfolgend soll die Erfindung anhand der beigefügten Zeichnung näher erläutert werden.

Es zeigen:

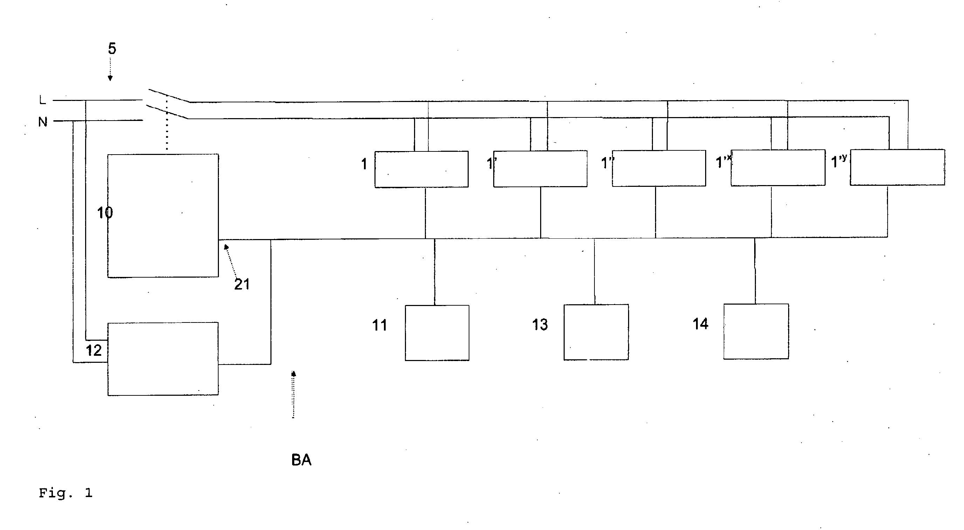

Fig. 1 zeigt eine Ausgestaltung einer Beleuchtungsanlage
Fig. 2 zeigt eine Ausgestaltung des Aufbaus einer erfindungsgemäßen Adresse
Fig. 3 zeigt eine Ausgestaltung des Aufbaus einer erfindungsgemäßen Adresse zur Erkennung von Adresskonflikten
Fig. 4 zeigt eine Ausgestaltung des Aufbaus einer erfindungsgemäßen Adresse zur Vermeidung von Adresskonflikten

Nachfolgend wird die Erfindung anhand eines Ausführungsbeispiels eines Betriebsgerätes für ein Leuchtmittel erklärt.

Nachfolgend wird die Erfindung anhand eines Ausführungsbeispiels einer Beleuchtungsanlage BA mit einer zentralen Steuereinheit 12, einem Steuergerät 10, die über das Steuergerät 10 an das Netz gekoppelten Betriebsgeräte 1, 1', 1", 1'^{x}, 1'^{y} und weiteren Steuergeräten 11, 13, 14 erläutert.

Die vorliegende Erfindung kann bei sämtlichen Arten von Betriebsgeräten für Leuchtmittel eingesetzt werden. Dabei ist die Anwendung von ganz verschiedenen Leuchtmitteln möglich, es können insbesondere anorganische oder organische Leuchtdioden oder auch Gasentladungslampen oder Halogenlampen eingesetzt werden.

Das Betriebsgeräte 1, 1', 1", 1'^{x}, 1'^{y}, die zentrale Steuereinheit 12 und das Steuergerät 10 sind Bestandteil einer Beleuchtungsanlage BA.

Zusätzlich können weitere Steuergeräte 11, 13, 14 an die Busleitung 21 angeschlossen sein.
Die verschiedenen Steuergeräte 11, 13, 14 werden auch als Aktuatoren bezeichnet und können verschiedene Sensoren wie beispielsweise Bewegungs- oder Helligkeitssensoren aber auch durch einen Benutzer steuerbare Aktuatoren wie beispielsweise Schalter, Taster oder auch berührungsempfindliche Bildschirme mit einem Benutzerinterface zur Beleuchtungssteuerung sein.

Die Busleitung 21 ist als zweidrahtige Datenleitung ausgebildet, die als Steuerbefehl ein Digitalsignal mit einer niedrigen Gleichspannung überträgt. Über die Busleitung 21 wird beispielweise eine Datenübertragung gemäß DALI Standard übertragen. Die Schnittstellenschaltungen der Betriebsgeräte 1, 1', 1", 1'^{x}, 1'^{y}, die zentrale Steuereinheit 12 und das Steuergerät 10 sind in der Lage, digitale Steuerbefehle, beispielsweise gemäß dem DALI Standard, zu empfangen.

Anzumerken ist, dass die Datenübertragung der Steuerbefehle über die Busleitung 21 nicht drahtgebunden erfolgen muß, sondern sie kann beispielsweise drahtlos über eine Funkverbindung oder über eine Power Line Communication (PLC) über das Stromversorgungsnetz 20 übertragen werden. Für die genannten Übertragungsvarianten können jeweils standardisierte Übertragungsverfahren analog zu dem DALI Standard für drahtgebundene Datenübertragung existieren, wobei gemäß dem erfindungsgemäßen Verfahren eine abgeänderte Datenübertragung über die gleiche Busleitung 21 erfolgen kann.
Die zentrale Steuereinheit 12 kann über die Busleitung 21 einzelne oder mehrere Betriebsgeräte 1 von Leuchtmitteln steuern, wobei sie digitale Steuerbefehle empfangen und auch aussenden kann. Bei einem entsprechenden Ausschaltbefehl auf der Busleitung 21, welcher durch das Steuergerät 10 empfangen und ausgewertet wird, kann das Steuergerät 10 die angeschlossenen Betriebsgeräte 1 vom Netz trennen, um deren Leistungsaufnahme auf 0 zu senken. Es werden dadurch die Betriebsgeräte 1 vom Betriebszustand in einen Ruhezustand überführt. Das Steuergerät 10 überwacht weiterhin die Busleitung 21 auf Steuerbefehle und kann diese abspeichern.

Die Netzankopplung und Netztrennung der Betriebsgeräte 1 von der Netzversorgung erfolgt durch einen Netzunterbrecher 5. Dieser Netzunterbrecher 5 kann ein Schalter wie zum Beispiel ein Halbleiterschalter oder ein Relais sein. Der Netzunterbrecher 5 kann in das Steuergerät 10 integriert sein oder aber durch einen Steuerausgang des Steuergerätes 10 angesteuert werden.

Das Steuergerät 10 kann mehrere unabhängige Netzankopplungen und somit voneinander unabhängige Betriebsgeräte 1 ansteuern, indem es mehrere Netzankopplungen ansteuern kann bzw. integriert hat. Die voneinander unabhängigen Betriebsgeräte 1 können durch unterschiedliche Adressen voneinander unterschieden werden.

Die Energieversorgung des Steuergerätes 10 und der Steuergeräte 11, 13, 14 und der zentralen Steuereinheit 12 kann über eine in das Steuergerät 10 integrierte Busversorgung erfolgen.
Dabei kann die Busversorgung die Busleitung 21 speisen, indem eine Übertragung nach dem sogenannten ,Active Low' Prinzip angewendet wird. Bei einer solchen Übertragung liegt dauerhaft ein Pegel von beispielweise 12V an, solange keine Daten übertragen werden. Im Fall einer Datenübertragung wird der Pegel zum Übertragen eines Bit auf einen Pegel unter beispielsweise 2V gezogen wird.

Auf diese Weise liegt eine dauerhafte Spannung auf der Busleitung 21 an und somit ist eine Versorgung der Steuergeräte 10 und 11 über die Busleitung 21 möglich.

Es kann das Steuergerät 10 über eine eigene Energieversorgung verfügen, die direkt an die Netzversorgung gekoppelt ist.

Die zentrale Steuereinheit 12 kann den Zustand der Betriebsgeräte 1 über die Busleitung 21 abfragen. Weiterhin kann die zentrale Steuereinheit 12 auch über direkt verbundene Taster oder Schalter, durch eine Schnittstelle zu einem Programmiergerät, durch einen Touchscreen oder andere Einstellmöglichkeiten auch direkt durch einen Benutzer konfiguriert und gesteuert werden. Durch die direkte Steuermöglichkeit kann der Benutzer auch Steuerbefehle wie beispielsweise Helligkeitswerte vorgeben.

Innerhalb der Beleuchtungsanlage BA mit mindestens einem Leuchtmittel können die Leuchtmittel, die durch zumindest ein Betriebsgerät 1, 1', 1", 1'^{x}, 1'^{y} abhängig von Befehlen einer zentralen Steuereinheit 12 angesteuert werden, eine Adresse aufweisen.
Die Berechnung der den Betriebsgeräten 1, 1', 1", 1'^{x}, 1'^{y} zu vergebenden Adresse A (auch Kurzadresse A genannt) kann aufgrund einer Modulo-Operation erfolgen. Bereits bei Auslieferung der Betriebsgeräte 1, 1', 1", 1'^{x}, 1'^{y} kann in den Betriebsgeräte 1, 1', 1", 1'^{x}, 1'^{y} jeweils eine voreingestellte Adresse L abgelegt sein. Diese voreingestellte Adresse L (auch Langadresse L genannt) kann jedoch für mehrere Betriebsgeräte 1, 1', 1", 1'^{x}, 1'^{y} vergeben worden sein oder auch für die Kommunikation auf der Busleitung 21 ungeeignet sein. Für eine störungsfreie und benutzerfreundliche Ansteuerung der Beleuchtungsanlage BA ist es erforderlich, dass jedes Betriebsgerät 1, 1', 1", 1'^{x}, 1'^{y} bzw. jedes Leuchtmittel eine eindeutige, nur einmal vergebene Adresse aufweist.

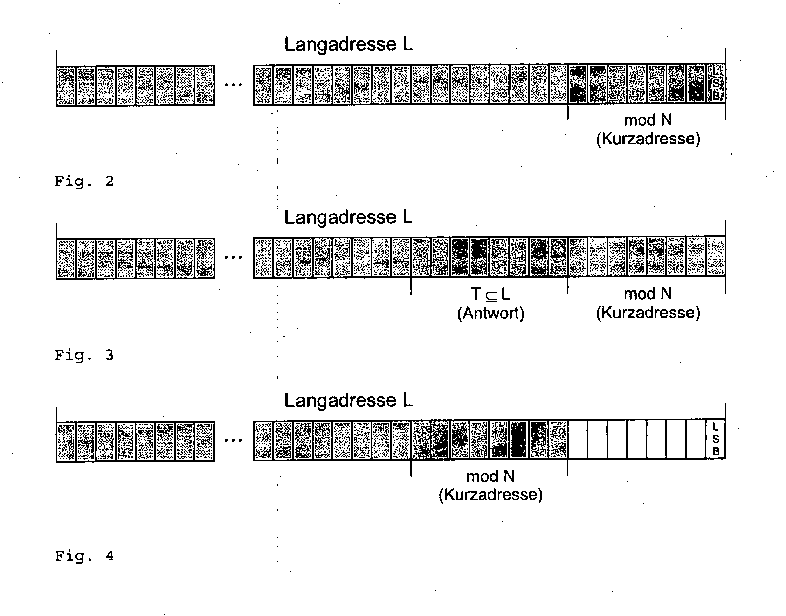

Der mögliche Ablauf einer Adressierung aufgrund einer Berechnung anhand einer Modulo-Operation wird anhand der Figuren 2 bis 4 beschrieben.

In der Fig. 2 wird eine Ausgestaltung des Aufbaus einer erfindungsgemäßen Übertragung einer Adresse gezeigt.

Gemäß dem erfindungsgemäßen Adressierungsverfahren für ein Leuchtmittel, wobei die Leuchtmittel durch zumindest ein Betriebsgerät 1, 1', 1", 1'^{x}, 1'^{y} abhängig von Befehlen einer zentralen Steuereinheit 12 angesteuert werden, werden die folgenden Schritte durchgeführt:
- Versetzen der Betriebsgeräte 1, 1', 1", 1'^{x}, 1'^{y} in einen Adressierungsmodus,
- Auslesen der jeweils in dem Betriebsgerät 1, 1', 1", 1'^{x}, 1'^{y} abgelegten voreingestellten Adresse L durch das Betriebsgerät 1, 1', 1", 1'^{x}, 1'^{y},
- Veranlassen einer Modulo-Operation durch die zentrale Steuereinheit 12, wobei ein Operand N für die Modulo-Operation vorgegeben wird,
- Durchführen der Modulo-Operation mit der voreingestellten Adresse L und dem vorgegebenen Operand N und Ablegen des Ergebnisses als neu vergebene Adresse A des Betriebsgerätes 1, 1', 1", 1'^{x}, 1'^{y}.

In der Fig. 3 wird eine Ausgestaltung des Aufbaus einer erfindungsgemäßen Übertragung einer Adresse zur Erkennung von Adresskonflikten gezeigt.

In einem weiteren Schritt wird die zentrale Steuereinheit 12 die möglichen Adressen A abfragen und prüfen, ob für eine bestimmte Adresse mehr als ein Betriebsgerät 1, 1', 1", 1'^{x}, 1'^{y} eine Rückmeldung sendet. Dieses Verfahren kann zur Erkennung von Adresskonflikten genutzt werden.

Beispielsweise kann der niedrigste Teil des Ganzzahlquotienten der Division L / N zurück gesendet werden. Übertragungsfehler treten dann auf, wenn 2 oder mehr Betreibsgeräte gleichzeitig antworten, sich somit die Antworten überlagern. Wurde kein Übertragungsfehler festgestellt, kann die zentrale Steuereinheit 12 das oder die Betriebsgeräte veranlassen, den nächsten Teil der voreingestellten Adresse L zu senden, und prüft die Antwort wieder hinsichtlich eines Übertragungsfehlers. Dieser Vorgang wird so lange wiederholt, bis entweder ein Übertragungsfehler festgestellt wurde, oder die gesamte voreingestellten Adresse L gesendet wurde.

Wurde ein Übertragungsfehler festgestellt, beendet die zentrale Steuereinheit 12 diesen Prüfvorgang und notiert sich die Adresse A für den Schritt der erneuten Modulo-Operation mit der voreingestellten Adresse L aber nach geändertem Verfahren zur Vermeidung von Adresskonflikten. Wurde am Ende kein Übertragungsfehler festgestellt, so handelt es sich um keine Doppeladresse. Die Adresse A wird von der Steuereinheit als gültig eingestuft. Durch einen weiteren Befehl beendet die zentrale Steuereinheit 12 für das Gerät mit dieser Adresse A den Adressiervorgang.
Nun wird der Prüfvorgang für die restlichen Adressen A nach demselben Verfahren durchgeführt.

In der Fig. 4 wird eine Ausgestaltung des Aufbaus einer erfindungsgemäßen Übertragung einer Adresse zur Vermeidung von Adresskonflikten gezeigt.

Gemäß dem erfindungsgemäßen Adressierungsverfahren für ein Leuchtmittel kann in einem weiteren Schritt die zentrale Steuereinheit 12 eine erneute Modulo-Operation mit einem neu vorgegebenen Operand N' für die Modulo-Operation für die Adressen A mehr als einer Rückmeldung veranlaßen, und darauf hin können die entsprechenden Betriebsgeräte 1, 1', 1", 1'^{x}, 1'^{y} erneut eine Modulo-Operation mit der voreingestellten Adresse L aber nach geändertem Verfahren durchführen und des Ergebnisses als neu vergebene Adresse A ablegen.

Gemäß dem erfindungsgemäßen Adressierungsverfahren für ein Leuchtmittel kann in einem weiteren Schritt die zentrale Steuereinheit 12 aber auch eine erneute Modulo-Operation mit dem Operand N für die Adressen A mehr als einer Rückmeldung veranlaßen, und darauf hin können die entsprechenden Betriebsgeräte 1, 1', 1", 1'^{x}, 1'^{y} erneut eine Modulo-Operation mit nur einem Teil der voreingestellten Adresse L (also mit geändertem Verfahren) durchführen und des Ergebnisses als neu vergebene Adresse A ablegen. Der Teil der voreingestellten Adresse L kann durch die Division L durch N ermittelt werden.

Weiterhin kann die zentrale Steuereinheit 12 die möglichen Adressen A solange abfragen und prüfen, bis für alle möglichen Adressen nicht mehr als ein Betriebsgerät 1, 1', 1", 1'^{x}, 1'^{y} eine Rückmeldung sendet.

Zur Überprüfung, ob für eine bestimmte Adresse mehr als ein Betriebsgerät 1, 1', 1", 1'^{x}, 1'^{y} eine Rückmeldung sendet, können die Betriebsgeräte 1, 1', 1", 1'^{x}, 1'^{y} mit der aktuell aufgerufenen Adresse als Rückantwort zumindest einen Teil ihrer abgelegten voreingestellten Adresse L senden.

In einem weiteren Schritt kann die zentrale Steuereinheit 12 die Rückantworten auswerten und auf Übertragungsfehler überprüfen.

Die erneute Modulo-Operation kann mit neu vorgegebenen Operand N' durchführt werden.
Die erneute Modulo-Operation kann mit geänderter Kombination der Operanden L, N, N' oder basierend auf einer zusätzlichen Vorberechnung durchführt wird.

Die Betriebsgeräte 1, 1', 1", 1'^{x}, 1'^{y} können nach dem DALI Standard kommunizieren.

Somit besteht Beleuchtungsanlage BA mit mindestens einem Leuchtmittel, wobei die Betriebsgeräte 1, 1', 1", 1'^{x}, 1'^{y} in einen Adressierungsmodus versetzen werden können und die jeweils in dem Betriebsgerät 1, 1', 1", 1'^{x}, 1'^{y} abgelegte voreingestellte Adresse L auslesen kann.

Die Betriebsgeräte 1, 1', 1", 1'^{x}, 1'^{y} können bei Veranlassen einer Modulo-Operation durch die zentrale Steuereinheit 12 eine Modulo-Operation mit der voreingestellten Adresse L und dem vorgegebenen Operand N durchführen und das Ergebnis als neu vergebene Adresse A des Betriebsgerätes 1, 1', 1", 1'^{x}, 1'^{y} ablegen, wobei ein Operand N für die Modulo-Operation durch die zentrale Steuereinheit 12 vorgegeben werden kann.

Die zentrale Steuereinheit 12 kann die möglichen Adressen A abfragen und prüfen, ob für eine bestimmte Adresse mehr als ein Betriebsgerät 1, 1', 1", 1'^{x}, 1'^{y} eine Rückmeldung sendet.

Die Leuchtmittel können gemäß dieser Erfindung adressiert werden. Üblicherweise werden dabei die einzelnen Leuchtmittel von je einem Betriebsgerät angesteuert. Es ist aber auch möglich, insbesondere bei Leuchtdioden, dass mehrere Leuchtmittel unabhängig voneinander über ein und dasselbe Betriebsgerät angesteuert werden können. Daher können in diesem Fall den einzelnen Leuchtmitteln unterschiedliche Adressen zugeordnet werden, um sie unabhängig voneinander ansteuern zu können.

## Patentansprüche

1. Adressierungsverfahren für Leuchtmittel, insbesondere Leuchtdioden, wobei die Leuchtmittel durch zumindest ein Betriebsgerät (1, 1', 1" ..) abhängig von Befehlen einer zentralen Steuereinheit (12) angesteuert werden, **gekennzeichnet durch** die folgenden Schritte:
- Versetzen der Betriebsgeräte (1, 1', 1" ..) in einen Adressierungsmodus,
- Auslesen der jeweils in dem Betriebsgerät (1, 1', 1" ..) abgelegten voreingestellten Adresse (L) **durch** das Betriebsgerät (1, 1', 1" ..),
- Veranlassen einer Modulo-Operation **durch** die zentrale Steuereinheit (12), wobei ein Operand (N) für die Modulo-Operation vorgegeben wird,
- Durchführen der Modulo-Operation mit der voreingestellten Adresse (L) und dem vorgegebenen Operand (N) und Ablegen des Ergebnisses als neu vergebene Adresse (A) des Betriebsgerätes (1, 1', 1" ..),
- in einem weiteren Schritt die zentrale Steuereinheit (12) die möglichen Adressen (A) abfragt und prüft, ob für eine bestimmte Adresse mehr als ein Betriebsgerät (1, 1', 1" ..) eine, Rückmeldung sendet,
- in einem weiteren Schritt die zentrale Steuereinheit (12) eine erneute Modulo-Operation für die Adressen (A) veranlasst wird, deren Abfrage zu mehr als einer Rückmeldung geführt hat,
die entsprech enden Betriebsgerätes (1,1',1"..) erneut eine Modulo- Operation mit der voreingestellen Adresse (L) aber nach geändertem Verfahren durchführen und des Ergebnisses als neu vergebene Adresse (A) ablegen,
**dadurch** gekennzeichnet, dass die erneute Modulo-Operation mit neu vorgegebenen Operand (N') durchführt wird.

2. Adressierungsverfahren für ein Leuchtmittel nach Anspruch 1,
**dadurch gekennzeichnet,**
**daß** die zentrale Steuereinheit (12) die möglichen Adressen (A) solange abfragt und prüft, bis für alle möglichen Adressen nicht mehr als ein Betriebsgerät (1, 1', 1" ..) eine Rückmeldung sendet.

3. Adressierungsverfahren für ein Leuchtmittel nach Anspruch 1 bis 2,
**dadurch gekennzeichnet,**
**daß** zur Überprüfung, ob für eine bestimmte Adresse mehr als ein Betriebsgerät (1, 1', 1" ..) eine Rückmeldung sendet, die Betriebsgeräte (1, 1', 1" ..) mit der aktuell aufgerufenen Adresse als Rückantwort zumindest einen Teil ihrer abgelegten voreingestellten Adresse (L) senden.

4. Adressierungsverfahren für ein Leuchtmittel nach Anspruch 3,
**dadurch gekennzeichnet**,
in einem weiteren Schritt die zentrale Steuereinheit (12) die Rückantworten auswertet und auf Übertragungsfehler überprüft.

5. Adressierungsverfahren für ein Leuchtmittel nach Anspruch 2,
**dadurch gekennzeichnet,**
**dass** die erneute Modulo-Operation mit geänderter Kombination der Operanden (L, N, N') oder basierend auf einer zusätzlichen Vorberechnung durchführt wird.

6. Adressierungsverfahren für ein Leuchtmittel nach Anspruch 1 bis 5,
**dadurch gekennzeichnet,**
**dass** die Betriebsgeräte (1, 1', 1" ..) nach dem DALI Standard kommunizieren können.

7. Beleuchtungsanlage (BA) mit Leuchtmitteln, wobei die Leuchtmittel durch zumindest ein Betriebsgerät (1, 1', 1" ..) abhängig von Befehlen einer zentralen Steuereinheit (12) angesteuert werden, und die Betriebsgeräte zum Ablegen einer dem Betriebsgerät zu vergebenden Adresse ausgelegt sind,
wobei das Betriebsgerät (1, 1', 1" ..) zur Berechnung der dem Betriebsgerät (1, 1', 1" ..) zu vergebenden Adresse (A) aufgrund einer Modulo-Operation mittels eines Adressierungsverfahrens gemäss einem der Ansprüche 1 bis 6 ausgelegt ist.

8. Betriebsgerät (1, 1', 1" ..) für Leuchtmittel, insbesondere Leuchtdioden, welches zur Unterstützung eines Adressierungsverfahrens gemäss einem der Ansprüche 1 bis 6 ausgelegt ist.

## Claims

1. Addressing method for luminous means, in particular light-emitting diodes, the luminous means being controlled by at least one operating device (1, 1', 1" ..) on the basis of commands from a central control unit (12), **characterized by** the following steps:
- the operating devices (1, 1', 1" ..) are changed to an addressing mode,
- the preset address (L) respectively stored in the operating device (1, 1', 1" ..) is read by the operating device (1, 1', 1" ..),
- the central control unit (12) causes a modulo operation, an operand (N) being predefined for the modulo operation,
- the modulo operation is carried out with the preset address (L) and the predefined operand (N) and the result is stored as the newly allocated address (A) of the operating device (1, 1', 1" ..),
- in a further step, the central control unit (12) queries and checks the possible addresses (A) in order to determine whether more than one operating device (1, 1', 1" ..) sends a response for a particular address,
- in a further step, the central control unit (12) causes a new modulo operation for those addresses (A) whose querying resulted in more than one response,
- the corresponding operating devices (1, 1', 1" ..) carry out a modulo operation again with the preset address (L) but according to a changed method and store the result as the newly allocated address (A),
**characterized in that** the new modulo operation is carried out with a newly predefined operand (N').

2. Addressing method for a luminous means according to Claim 1,
**characterized**
**in that** the central control unit (12) queries and checks the possible addresses (A) until no more than one operating device (1, 1', 1" ..) sends a response for all possible addresses.

3. Addressing method for a luminous means according to Claims 1 to 2,
**characterized**
**in that**, in order to check whether more than one operating device (1, 1', 1" ..) sends a response for a particular address, the operating devices (1, 1', 1" ..) with the currently called address send at least part of their stored preset address (L) as a reply.

4. Addressing method for a luminous means according to Claim 3,
**characterized**
**in that**, in a further step, the central control unit (12) evaluates the replies and checks them for transmission errors.

5. Addressing method for a luminous means according to Claim 2,
**characterized**
**in that** the new modulo operation is carried out with a changed combination of operands (L, N, N') or on the basis of an additional pre-calculation.

6. Addressing method for a luminous means according to Claims 1 to 5,
**characterized**
**in that** the operating devices (1, 1', 1" ..) can communicate according to the DALI standard.

7. Lighting system (BA) having luminous means, the luminous means being controlled by at least one operating device (1, 1', 1" ..) on the basis of commands from a central control unit (12), and the operating devices being designed to store an address to be allocated to the operating device, the operating device (1, 1', 1" ..) being designed to calculate the address (A) to be allocated to the operating device (1, 1', 1" ..) on the basis of a modulo operation using an addressing method according to one of Claims 1 to 6.

8. Operating device (1, 1', 1" ..) for luminous means, in particular light-emitting diodes, which is designed to assist an addressing method according to one of Claims 1 to 6.

## Revendications

1. Procédé d'adressage pour des moyens lumineux, notamment des diodes électroluminescentes, les moyens lumineux étant commandés par au moins un appareil opérationnel (1, 1', 1", ...) en fonction d'instructions d'une unité de commande centrale (12), **caractérisé par** les étapes suivantes :
- amenée de l'appareil opérationnel (1, 1', 1", ...) dans un mode d'adressage,
- lecture de l'adresse préréglée (L) à chaque fois stockée dans l'appareil opérationnel (1, 1', 1", ...) par l'appareil opérationnel (1, 1', 1", ...),
- initiation d'une opération de modulo par l'unité de commande centrale (12), un opérande (N) pour l'opération de modulo étant prédéfini,
- exécution de l'opération de modulo avec l'adresse préréglée (L) et l'opérande (N) prédéfini et enregistrement du résultat en tant que nouvelle adresse (A) attribuée de l'appareil opérationnel (1, 1', 1", ...),
- dans une étape supplémentaire, l'unité de commande centrale (12) interroge les adresses (A) possibles et vérifie si plus d'un appareil opérationnel (1, 1', 1", ...) envoie un message en retour pour une adresse donnée,
- dans une étape supplémentaire, l'unité de commande centrale (12) initie une nouvelle opération de modulo pour les adresses (A) dont l'interrogation a donné lieu à plus d'un message en retour, les appareils opérationnels (1, 1', 1", ...) correspondants exécutent de nouveau une opération de modulo avec l'adresse préréglée (L), mais d'après un procédé modifié, et enregistrent le résultat en tant que nouvelle adresse (A) attribuée,
**caractérisé en ce que** la nouvelle opération de modulo est exécutée avec un nouvel opérande (N') prédéfini.

2. Procédé d'adressage pour des moyens lumineux selon la revendication 1, **caractérisé en ce que** l'unité de commande centrale (12) interroge et contrôle les adresses (A) possibles jusqu'à ce que pour toutes les adresses possibles, un seul appareil opérationnel (1, 1', 1", ...) au maximum envoie un message en retour.

3. Procédé d'adressage pour des moyens lumineux selon les revendications 1 à 2, **caractérisé en ce que** pour vérifier si plus d'un appareil opérationnel (1, 1', 1", ...) envoie un message en retour pour une adresse donnée, les appareils opérationnels (1, 1', 1", ...) ayant l'adresse actuellement invoquée envoient comme réponse au moins une partie de leur adresse préréglée (L) enregistrée.

4. Procédé d'adressage pour des moyens lumineux selon la revendication 3, **caractérisé en ce que** dans une étape supplémentaire, l'unité de commande centrale (12) interprète les réponses et vérifie s'il y a présence d'erreurs de transmission.

5. Procédé d'adressage pour des moyens lumineux selon la revendication 2, **caractérisé en ce que** la nouvelle opération de modulo est exécutée avec une combinaison modifiée des opérandes (L, N, N') ou en se basant sur un calcul préalable supplémentaire.

6. Procédé d'adressage pour des moyens lumineux selon l'une des revendications 1 à 5, **caractérisé en ce que** les appareils opérationnels (1, 1', 1", ...) peuvent communiquer selon la norme DALI.

7. Équipement d'éclairage (BA) comprenant des moyens lumineux, les moyens lumineux étant commandés par au moins un appareil opérationnel (1, 1', 1", ...) en fonction d'instructions d'une unité de commande centrale (12) et les appareils opérationnels étant conçus pour enregistrer une adresse à attribuer à l'appareil opérationnel, l'appareil opérationnel (1, 1', 1", ...) étant conçu pour calculer l'adresse (A) à attribuer à l'appareil opérationnel (1, 1', 1", ...) sur la base d'une opération de modulo au moyen d'un procédé d'adressage selon l'une des revendications 1 à 6.

8. Appareil opérationnel (1, 1', 1", ...) pour des moyens lumineux, notamment des diodes électroluminescentes, lequel est conçu pour assister un procédé d'adressage selon l'une des revendications 1 à 6.
